# FASCICULE DE BREVET EUROPEEN

(11) **EP 4 003 768 B1**
(45) Date de publication et mention de la délivrance du brevet: **26.07.2023**
(21) Numéro de dépôt: 20747025.3
(22) Date de dépôt: 23.06.2020
(51) Int. Cl.: B60K 6/48, B60W 10/06, B60W 10/08, B60W 20/13, B60W 30/18, B60W 50/00

(54) **CONTRÔLE DES RECHARGES D'UNE BATTERIE D'UN VÉHICULE DONT LA BOÎTE DE VITESSES EST AU NEUTRE**
STEUERUNG DER AUFLADUNG EINER BATTERIE EINES FAHRZEUGES IM LEERLAUF
CONTROL OF THE RECHARGES OF A BATTERY OF A VEHICLE IN WHICH THE GEARBOX IS IN NEUTRAL

(30) Priorité: 23.07.2019 FR 1908319
(43) Date de publication de la demande: 01.06.2022
(73) Titulaire: PSA Automobiles SA, 78300 Poissy (FR)
(72) Inventeur: ROCQ, Gaetan, 78125 LA BOISSIERE ECOLE (FR); MILHAU, Yohan, 78630 ORGEVAL (FR)
(86) Numéro de dépôt international: PCT/FR2020/051090
(87) Numéro de publication internationale: WO 2021/014060

(56) Documents cités:
- WO-A1-2014/135759
- DE-A1-102012 216 998
- DE-A1-102014 222 545
- DE-A1-102018 002 893
- FR-A1- 2 955 715

## Description

La présente invention revendique la priorité de la demande française 1908319 déposée le 23.07.2019.

### Domaine technique de l'invention

L'invention concerne les véhicules comprenant des première et seconde machines motrices couplées via un embrayage, et plus précisément le contrôle des recharges de la batterie qui est couplée à la seconde machine motrice dans ces véhicules.

### Etat de la technique

Certains véhicules comprennent une chaîne de transmission comprenant une première machine motrice, comme par exemple un moteur thermique ou une machine électrique ou hydraulique, couplée à un embrayage également couplé à une seconde machine motrice, électrique et également couplée à une batterie rechargeable et à un arbre primaire d'une boîte de vitesses couplée à un train. Au sein de tels véhicules, les première et seconde machines motrices font partie de ce que l'on appelle couramment le groupe motopropulseur (ou GMP).

On entend ici par « machine motrice » une machine agencée de manière à fournir ou récupérer du couple pour déplacer un véhicule, soit seule soit en complément d'au moins une autre machine motrice thermique ou non-thermique. Une machine motrice non-thermique peut, par exemple, être une machine (ou un moteur) électrique, une machine hydraulique, une machine pneumatique (ou à air comprimé), ou un volant d'inertie. Une machine motrice thermique peut, par exemple, être un moteur thermique.

Lorsque l'on veut recharger à l'arrêt la batterie de l'un de ces véhicules, on active une fonction de recharge au neutre consistant à utiliser le GMP comme un groupe électrogène qui convertit de la puissance produite par la première machine motrice en puissance de recharge pour la batterie. Cette situation nécessite que la boîte de vitesses soit dans une position neutre afin que le véhicule ne puisse pas se déplacer, puis que l'on fasse fonctionner la première machine motrice (si elle ne fonctionne pas encore) et que l'on accouple les première et seconde machines motrices via l'embrayage. Ensuite, on utilise la première machine motrice pour produire un couple de recharge pendant que la seconde machine motrice stabilise le régime optimal de l'ensemble constitué par les première et seconde machines motrices en s'opposant au couple de recharge produit. Ce couple d'opposition génère alors une recharge de la batterie.

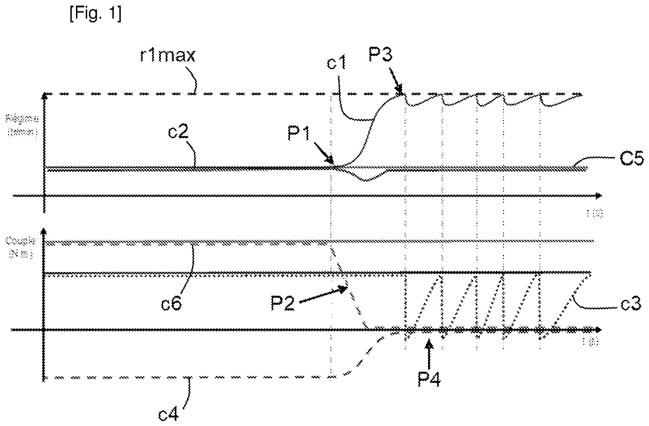

Comme le sait l'homme de l'art, il est courant que l'on utilise pour la seconde machine motrice une fonction de régulation de régime afin de s'opposer à la première machine motrice et ainsi stabiliser le régime optimal. Comme on peut l'observer sur les diagrammes de la figure 1, dans une première partie référencée P1 le régime de la première machine motrice (courbe c1) est lié au régime de la seconde machine motrice (courbe c2) car l'embrayage est fermé (couple de l'embrayage supérieur au couple de la première machine motrice). On observe également que la première machine motrice fournit un couple positif (courbe c3) alors que la seconde machine motrice fournit le même couple mais de signe opposé (courbe c4) afin de maintenir le régime de l'arbre primaire (qui est ici égal au second régime) constant et égal à la consigne de régime de l'arbre primaire (courbe c5). Si une chute non désirée du couple de l'embrayage (courbe c6) survient dans une deuxième partie référencée P2, la première machine motrice n'est plus retenue par l'embrayage et donc son régime (courbe c1) augmente très fortement, ce qui risque de l'endommager. Cette chute non désirée survient généralement en cas de mise en glissement de l'embrayage résultant d'un mauvais suivi de consigne ou d'une défaillance de l'embrayage induisant une ouverture partielle ou complète de ce dernier. Afin d'éviter une casse immédiate de la première machine motrice lorsque son régime atteint un régime maximal r1max dans une troisième partie référencée P3, on peut imposer, lorsqu'il s'agit d'un moteur thermique, des coupures d'injection brutales lorsque le régime de la première machine motrice devient très proche du régime maximal r1max, mais ces coupures d'injection génèrent de forts bruits et de fortes vibrations (ou secousses) dans une quatrième partie référencée P4. De son côté le régime de la seconde machine motrice (courbe c2) se stabilise sur la consigne de régime de l'arbre primaire (courbe c5) du fait qu'il est piloté en régulation de régime. Cette situation peut s'avérer très inquiétante et stressante pour le conducteur et les passagers d'un véhicule.

On connait en outre le document de brevet DE-A1-102012216998 divulguant un procédé selon le préambule de la revendication 1.

On connait également des documents de brevet DE-A1-102014222545, FR-A1-2955715, DE-A1-102018002893, et WO-A1-2014135759, différents procédés de contrôle de la première machine motrice ou procédé de détection d'envolée d'un régime d'un moteur thermique.

L'invention a donc notamment pour but d'améliorer la situation.

### Présentation de l'invention

Elle propose notamment à cet effet un procédé de contrôle pour un véhicule selon la revendication 1.

Un tel contrôle du premier couple permet d'empêcher les régimes élevés de la première machine motrice et donc tout risque d'endommagement de cette dernière.

Le procédé de contrôle selon l'invention peut comporter d'autres caractéristiques qui peuvent être prises séparément ou en combinaison, et notamment :
- dans un premier mode de réalisation, dans son étape on peut réduire le premier couple produit par la première machine motrice en fonction de l'écart entre les premier et second régimes ;
- dans son étape on peut déterminer un premier couple de limitation pour la première machine motrice en fonction de données stockées établissant une correspondance entre des écarts entre les premier et second régimes et des premiers couples de limitation ;
- en variante, dans son étape on peut imposer à la première machine motrice de produire un premier couple de limitation choisi lorsque l'écart entre les premier et second régimes devient supérieur à un seuil ;
- le premier couple de limitation imposé peut être prédéfini ou bien choisi en fonction de l'écart ;
- dans son étape on peut utiliser un seuil qui est choisi en fonction du second régime ou de la consigne de régime de l'arbre primaire ;
- dans un second mode de réalisation, dans son étape on peut réduire le premier régime de la première machine motrice en fonction de l'écart entre les premier et second régimes.

L'invention propose également un produit programme d'ordinateur comprenant un jeu d'instructions qui, lorsqu'il est exécuté par des moyens de traitement, est propre à mettre en oeuvre un procédé de contrôle du type de celui présenté ci-avant pour contrôler une recharge d'une batterie d'un véhicule comprenant une première machine motrice couplée à un embrayage également couplé à une seconde machine motrice, électrique et également couplée à cette batterie et à un arbre primaire d'une boîte de vitesses qui est couplée à un train.

L'invention propose également un dispositif de contrôle permettant de contrôler une recharge d'une batterie d'un véhicule selon la revendication 9.

L'invention propose également un véhicule, éventuellement de type automobile, et comprenant, d'une part, une première machine motrice couplée à un embrayage également couplé à une seconde machine motrice, électrique et également couplée à une batterie rechargeable et à un arbre primaire d'une boîte de vitesses couplée à un train, et, d'autre part, un dispositif de contrôle du type de celui présenté ci-avant.

Par exemple, la première machine motrice peut être un moteur thermique ou une machine électrique alimentée en énergie électrique par la batterie.

### Brève description des figures

D'autres caractéristiques et avantages de l'invention apparaîtront à l'examen de la description détaillée ci-après, et des dessins annexés, sur lesquels :
[Fig. 1] illustre schématiquement, au sein d'un premier diagramme (partie supérieure), un premier exemple de courbes d'évolution temporelle des premier et second régimes respectivement des première et seconde machines motrices d'un véhicule de l'art antérieur pendant une phase de recharge de la batterie comportant une chute du deuxième couple de l'embrayage, et au sein d'un deuxième diagramme (partie inférieure), un second exemple de courbes d'évolution temporelle des premier et troisième couples des première et seconde machines motrices de ce véhicule pendant cette même phase de recharge,
[Fig. 2] illustre schématiquement et fonctionnellement un véhicule comprenant une chaîne de transmission hybride et un calculateur de supervision équipé d'un dispositif de contrôle selon l'invention,
[Fig. 3] illustre schématiquement un exemple d'algorithme mettant en oeuvre un procédé de contrôle selon l'invention,

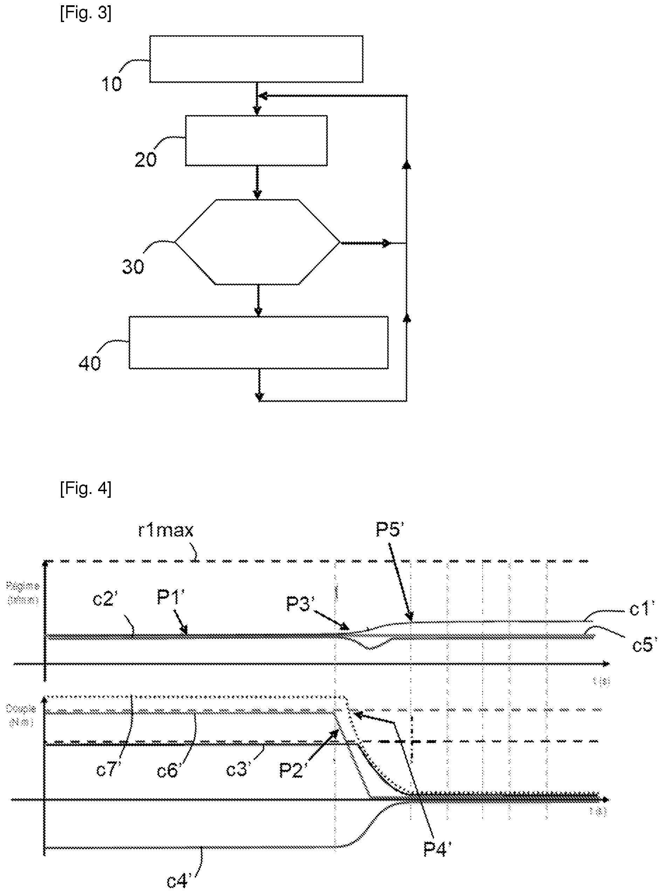

[Fig. 4] illustre schématiquement, au sein d'un premier diagramme (partie supérieure), un premier exemple de courbes d'évolution temporelle des premier et second régimes respectivement des première et seconde machines motrices d'un véhicule équipé d'un dispositif de contrôle selon l'invention pendant une phase de recharge de la batterie comportant une chute du deuxième couple de l'embrayage, et au sein d'un deuxième diagramme (partie inférieure), un second exemple de courbes d'évolution temporelle des premier et troisième couples des première et seconde machines motrices de ce véhicule pendant cette même phase de recharge, et
[Fig. 5] illustre schématiquement et fonctionnellement un exemple de réalisation d'un dispositif de contrôle selon l'invention.

### Description détaillée de l'invention

L'invention a notamment pour but de proposer un procédé de contrôle, et un dispositif de contrôle DC associé, destinés à permettre le contrôle des recharges d'une batterie BR d'un véhicule V comprenant une première machine motrice MM1 couplée à un embrayage EM, également couplé à une seconde machine motrice MM2, électrique et également couplée à cette batterie BR et à un arbre primaire AP d'une boîte de vitesses BV couplée à un train T1.

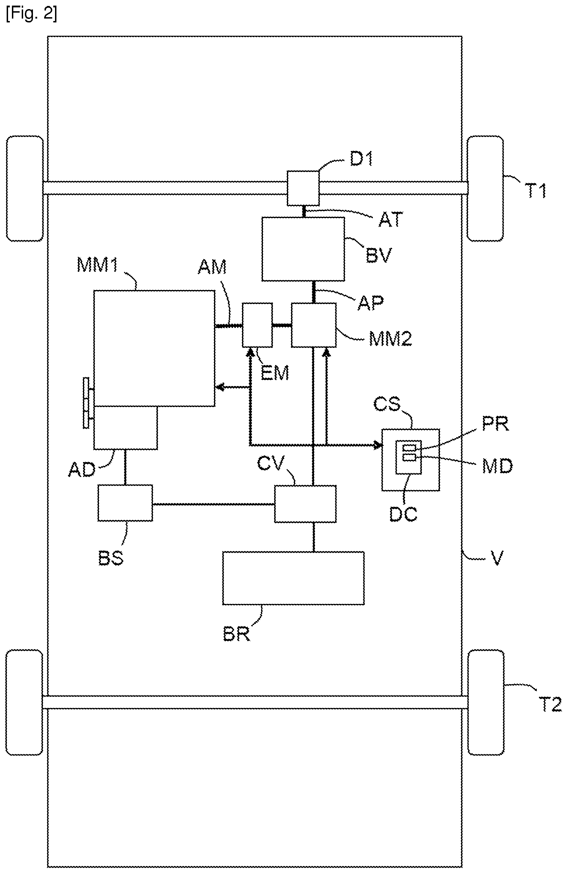

Dans ce qui suit, on considère, à titre d'exemple non limitatif, que le véhicule V est de type automobile. Il s'agit par exemple d'une voiture, comme illustré non limitativement sur la figure 2. Mais l'invention n'est pas limitée à ce type de véhicule. Elle concerne en effet tout type de véhicule comprenant une chaîne de transmission comportant au moins une première machine motrice, thermique ou non-thermique et couplée à un embrayage également couplé à une seconde machine motrice, électrique et également couplée à un arbre primaire d'une boîte de vitesses couplée à un train. Par conséquent, l'invention concerne non seulement les véhicules terrestres, mais également les bateaux et les avions.

Il est rappelé que l'on entend ici par « machine motrice » une machine agencée de manière à fournir ou récupérer du couple pour déplacer un véhicule, soit seule soit en complément d'une autre machine motrice thermique ou non-thermique. Une machine motrice non-thermique peut, par exemple, être une machine (ou un moteur) électrique, une machine hydraulique, une machine pneumatique (ou à air comprimé), ou un volant d'inertie. Une machine motrice thermique peut, par exemple, être un moteur thermique.

On a schématiquement représenté sur la figure 2 un véhicule V comprenant une chaîne de transmission, un calculateur de supervision CS propre à superviser (ou gérer) le fonctionnement de la chaîne de transmission, et un dispositif de contrôle DC selon l'invention.

La chaîne de transmission comprend ici, notamment, une première machine motrice MM1, un arbre moteur AM, un embrayage EM, une seconde machine motrice MM2 électrique, une boîte de vitesses BV, une batterie BR rechargeable et un arbre de transmission AT.

On considère dans ce qui suit, à titre d'exemple non limitatif, que la première machine motrice MM1 est thermique. Il s'agit par exemple d'un moteur thermique. Mais l'invention n'est pas limitée à ce type de première machine motrice. En effet, la première machine motrice MM1 peut être thermique ou non-thermique (et notamment électrique).

Cette première machine motrice MM1 (ici un moteur thermique) comprend un vilebrequin (non représenté) qui est solidarisé fixement à l'arbre moteur AM afin d'entraîner ce dernier (AM) en rotation. Par ailleurs, cette première machine motrice MM1 est destinée à fournir un premier couple pour au moins un premier train T1 (ici de roues), via l'embrayage EM, la seconde machine motrice MM2, et la boîte de vitesses BV.

Par exemple, ce premier train T1 est situé à l'avant du véhicule V, et couplé à l'arbre de transmission AT, de préférence, et comme illustré, via un différentiel (ici avant) D1. Mais dans une variante ce premier train T1 pourrait être situé à l'arrière du véhicule V.

L'embrayage EM est chargé de coupler/découpler l'arbre moteur AM (couplé à la première machine motrice MM1) à/de la seconde machine motrice MM2, sur ordre du calculateur de supervision CS, afin de communiquer un deuxième couple à partir du premier couple que produit la première machine motrice MM1. Cet embrayage EM peut être de tout type dès lors qu'il peut prendre au moins un premier état (couplé ou embrayé ou encore fermé) dans lequel il assure le couplage maximal entre les première MM1 et seconde MM2 machines motrices, un deuxième état (découplé ou débrayé ou encore ouvert) dans lequel il découple complètement la première machine motrice MM1 de la seconde machine motrice MM2, et un troisième état glissant.

La seconde machine motrice MM2 (électrique) est couplée à la batterie BR afin d'être alimentée en énergie ou d'alimenter cette dernière (BR) en énergie. Elle est également couplée à la sortie de l'embrayage EM, pour recevoir le deuxième couple, et à l'arbre primaire AP de la boîte de vitesses BV, pour lui fournir un troisième couple.

Par exemple, la batterie BR est de type basse tension (typiquement 220 V à titre illustratif). Mais elle pourrait être de type moyenne tension ou haute tension.

L'arbre primaire AP de la boîte de vitesses BV est destiné à recevoir le troisième couple de la seconde machine motrice MM2.

La boîte de vitesses BV comprend aussi au moins un arbre secondaire (non représenté) destiné à recevoir le troisième couple via l'arbre primaire AP afin de le communiquer à l'arbre de transmission AT auquel il est couplé et qui est couplé indirectement aux roues motrices (ici avant) du véhicule V via le différentiel D1.

On notera, comme illustré non limitativement sur la figure 2, que la chaîne de transmission peut également comprendre un démarreur ou un alternodémarreur AD couplé à la première machine motrice MM1 et chargé de lancer ce dernier (MM1) afin de lui permettre de démarrer. Ce lancement se fait grâce à de l'énergie électrique qui est, par exemple et comme illustré non limitativement, stockée dans une batterie de servitude BS. Cette dernière (BS) peut être agencé sous la forme d'une batterie de type très basse tension (par exemple 12 V, 24 V ou 48V), et peut aussi, par exemple, alimenter un réseau de bord auquel sont connectés des équipements électriques du véhicule V. On notera que la batterie de servitude BS peut, comme illustré non limitativement, être couplée à la batterie BR et à la seconde machine motrice MM2 via un convertisseur CV de type DC/DC, afin de pouvoir être rechargée.

Les fonctionnements des première MM1 et seconde MM2 machines motrices et de l'embrayage EM peuvent être contrôlés par le calculateur de supervision CS.

On notera que la chaîne de transmission pourrait également comprendre une troisième machine motrice non-thermique en complément de ses première MM1 et seconde MM2 machines motrices. Dans ce cas, cette troisième machine motrice non-thermique est chargée de fournir du couple pour un second train T2 du véhicule V, par exemple situé à l'arrière, à partir de l'énergie stockée dans la batterie BR. Elle fonctionne alors soit seule soit en complément de la première machine motrice MM1 et/ou la seconde machine motrice MM2, en fonction des commandes fournies par le calculateur de supervision CS.

Comme évoqué plus haut, l'invention propose un procédé de contrôle destiné à permettre le contrôle de la recharge de la batterie BR. Ce procédé de contrôle peut être mis en oeuvre au moins partiellement par le dispositif de contrôle DC du véhicule V qui comprend à cet effet au moins un processeur PR, par exemple de signal numérique (ou DSP (« Digital Signal Processor »)), et au moins une mémoire MD, et donc qui peut être réalisé sous la forme d'une combinaison de circuits ou composants électriques ou électroniques (ou « hardware ») et de modules logiciels (ou « software »). La mémoire MD est vive afin de stocker des instructions pour la mise en oeuvre par le processeur PR d'une partie au moins du procédé de contrôle. Le processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique.

Dans l'exemple illustré non limitativement sur la figure 2, le dispositif de contrôle DC fait partie du calculateur de supervision CS. Mais cela n'est pas obligatoire. Ce dispositif de contrôle DC pourrait en effet être un équipement couplé au calculateur de supervision CS, directement ou indirectement.

Comme illustré non limitativement sur la figure 3, le procédé de contrôle, selon l'invention, comprend une étape 10-40 qui débute dans une sous-étape 10 lorsqu'est décidé (en interne (par exemple par le calculateur de supervision CS) ou par le conducteur) d'effectuer une phase de recharge de la batterie BR alors que la boîte de vitesses BV est dans une position neutre (ou point mort).

Lorsque la dernière condition est satisfaite (ou présente) et que la batterie BR est dans une phase de recharge, on (le dispositif de contrôle DC) commence par surveiller dans une sous-étape 20 un écart er entre les premier et second régimes respectivement des première MM1 et seconde MM2 machines motrices.

Cette surveillance est destinée à contrôler dans l'étape 10-40 (du procédé) le premier couple qui est produit par la première machine motrice MM1 en fonction de cet écart er.

Grâce à ce contrôle du premier couple on peut empêcher les régimes élevés de la première machine motrice MM1 et donc tout risque d'endommagement de cette dernière (MM1) comme illustré dans les exemples de diagrammes de régime (partie supérieure) et de couple (partie inférieure) de la figure 4.

En effet, on peut observer que dans une première partie référencée P1' le premier régime de la première machine motrice MM1 (courbe c1') est lié au second régime de la seconde machine motrice MM2 (courbe c2') car l'embrayage EM est fermé (deuxième couple de l'embrayage EM (courbe c6') supérieur au premier couple de la première machine motrice MM1 (courbe c3')). On observe également que la première machine motrice MM1 fournit un premier couple positif (courbe c3') alors que la seconde machine motrice MM2 fournit un troisième couple (courbe c4') légèrement inférieur au premier couple mais de signe opposé afin de maintenir le régime de l'arbre primaire AP (qui est ici égal au troisième régime) constant et égal à la consigne de régime de l'arbre primaire (courbe c5'). Dans une deuxième partie référencée P2', on observe une chute non désirée du deuxième couple de l'embrayage (courbe c6'), ce qui est automatiquement détecté par le dispositif de contrôle DC qui surveille l'écart er entre les premier et second régimes. En effet, la première machine motrice MM1 n'est plus retenue par l'embrayage EM et donc son premier régime (courbe c1') se met à augmenter alors que le second régime de la seconde machine motrice MM2 (courbe c2') se met à diminuer (car cette dernière (MM2) applique un couple négatif au début de l'ouverture de l'embrayage EM), ce qui provoque une augmentation de l'écart er dans une troisième partie référencée P3'. Le dispositif de contrôle DC décide alors immédiatement de réduire le premier couple produit par la première machine motrice MM1 (courbe c3') dans une quatrième partie référencée P4'. Il en résulte certes une diminution progressive du troisième couple produit par la seconde machine motrice MM2 (courbe c4'), mais surtout un évitement d'emballement du premier régime de la première machine motrice MM1 (courbe c1') dans une cinquième partie référencée P5' (on peut observer qu'il demeure très éloigné du régime maximal r1max). De son côté le second régime de la seconde machine motrice (courbe c2') se stabilise sur la consigne de régime de l'arbre primaire AP (courbe c5') du fait qu'il est piloté en régulation de régime.

On notera que, lorsque la première machine motrice MM1 est un moteur thermique, l'invention permet aussi d'éviter d'effectuer des coupures injection et donc la génération de bruits et de vibrations (comme cela arrive dans un véhicule de l'art antérieur).

Au moins deux modes de réalisation peuvent être envisagés pour réaliser le contrôle du fonctionnement de la première machine motrice MM1 en fonction de l'écart er.

Dans un premier mode de réalisation illustré non limitativement sur la figure 3, dans l'étape 10-40 du procédé on (le dispositif de contrôle DC) peut réduire le premier couple produit par la première machine motrice MM1 en fonction de l'écart er entre les premier et second régimes.

Pour ce faire, dans l'étape 10-40 du procédé on (le dispositif de contrôle DC) peut imposer à la première machine motrice MM1 de produire un premier couple de limitation choisi lorsque l'écart er entre les premier et second régimes devient supérieur à un seuil sr (soit er > sr). Dans ce cas, comme illustré non limitativement sur la figure 3, on (le dispositif de contrôle DC) compare chaque écart er au seuil sr dans une sous-étape 30.

Si l'écart er est inférieur au seuil sr, le dispositif de contrôle DC retourne effectuer la sous-étape 20. En revanche, si l'écart er est supérieur au seuil s2, le dispositif de contrôle DC effectue une sous-étape 40 dans laquelle il réduit le premier couple en imposant un couple de limitation choisi (courbe c7' de la figure 4).

En présence de la dernière option, le premier couple de limitation imposé peut, par exemple, être soit prédéfini (et donc constant quelle que soit la valeur de l'écart er), soit choisi en fonction de l'écart er.

Egalement en présence de la dernière option, le seuil sr peut être choisi en fonction du second régime ou de la consigne de régime de l'arbre primaire AP.

En variante de l'option décrite ci-dessus, dans l'étape 10-40 du procédé on (le dispositif de contrôle DC) peut déterminer un premier couple de limitation pour la première machine motrice MM1 en fonction de données stockées qui établissent une correspondance entre des écarts entre les premier et second régimes et des premiers couples de limitation. Ces données (stockées dans le dispositif de contrôle DC) peuvent constituer ce que l'homme de l'art appelle fréquemment une cartographie.

Dans un second mode de réalisation non illustré, dans l'étape 10-40 du procédé on (le dispositif de contrôle DC) peut réduire le premier régime de la première machine motrice MM1 en fonction de l'écart er entre les premier et second régimes. Par exemple, à chaque pas de calcul du dispositif de contrôle DC, on peut définir une valeur de couple de limitation dépendante de l'écart er entre les premier et second régimes. On paramétrera le couple de limitation afin qu'il soit décroissant et qu'il puisse s'annuler complètement lorsque l'écart de régime er augmente. Il en résulte de façon certaine une stabilisation du régime de la première machine motrice MM1. Ce second mode de réalisation est plus consommateur de ressources de calcul que le premier et de surcroît plus long à paramétrer.

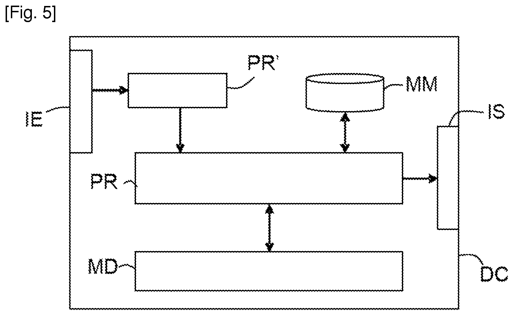

On notera, comme illustré non limitativement sur la figure 5, que le dispositif de contrôle DC peut aussi comprendre, en complément de sa mémoire vive MD et de son processeur PR, une mémoire de masse MM, notamment pour le stockage des valeurs des premiers et seconds régimes et des différentes consignes de couple et de régime, et de données intermédiaires intervenant dans tous ses calculs et traitements. Par ailleurs, ce dispositif de contrôle DC peut aussi comprendre une interface d'entrée IE pour la réception d'au moins les valeurs des premier et second régimes et des différentes consignes de couple et de régime pour les utiliser dans des calculs ou traitements, éventuellement après les avoir mis en forme et/ou démodulés et/ou amplifiés, de façon connue en soi, au moyen d'un processeur de signal numérique PR'. De plus, ce dispositif de contrôle DC peut aussi comprendre une interface de sortie IS, notamment pour délivrer des ordres, commandes et messages (au moins pour le calculateur de supervision CS).

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de contrôle décrit ci-avant pour contrôler la recharge de la batterie BR du véhicule V.

On notera également qu'une ou plusieurs sous-étapes de l'étape du procédé de contrôle peuvent être effectuées par des composants différents. Ainsi, le procédé de contrôle peut-être mis en oeuvre par une pluralité de processeurs de signal numérique, mémoire vive, mémoire de masse, interface d'entrée, interface de sortie.

## Revendications

1. Procédé de contrôle pour un véhicule (V) comprenant une première machine motrice (MM1) couplée à un embrayage (EM) également couplé à une seconde machine motrice (MM2), électrique et également couplée à une batterie (BR) rechargeable et à un arbre primaire (AP) d'une boîte de vitesses (BV) couplée à un train, ce procédé comprenant une étape (10-40) dans laquelle, lorsque ladite boîte de vitesses (BV) est dans une position neutre et que ladite batterie (BR) est dans une phase de recharge, on contrôle un premier couple produit par ladite première machine motrice (MM1), **caractérisé en ce que**, en outre, on surveille un écart entre des premier et second régimes respectivement desdites première (MM1) et seconde (MM2) machines motrices, et on contrôle ce premier couple produit par ladite première machine motrice (MM1) en fonction dudit écart.

2. Procédé selon la revendication 1, **caractérisé en ce que** dans ladite étape (10-40) on réduit ledit premier couple produit par ladite première machine motrice (MM1) en fonction dudit écart entre les premier et second régimes.

3. Procédé selon la revendication 2, **caractérisé en ce que** dans ladite étape (10-40) on détermine un premier couple de limitation pour ladite première machine motrice (MM1) en fonction de données stockées établissant une correspondance entre des écarts entre lesdits premier et second régimes et des premiers couples de limitation.

4. Procédé selon la revendication 2, **caractérisé en ce que** dans ladite étape (10-40) on impose à ladite première machine motrice (MM1) de produire un premier couple de limitation choisi lorsque ledit écart entre lesdits premier et second régimes devient supérieur à un seuil.

5. Procédé selon la revendication 4, **caractérisé en ce que** ledit premier couple de limitation imposé est prédéfini.

6. Procédé selon la revendication 4, **caractérisé en ce que** ledit premier couple de limitation imposé est choisi en fonction dudit écart.

7. Procédé selon la revendication 1, **caractérisé en ce que** dans ladite étape (10-40) on réduit ledit premier régime de la première machine motrice (MM1) en fonction dudit écart entre les premier et second régimes.

8. Produit programme d'ordinateur comprenant un jeu d'instructions qui, lorsqu'il est exécuté par des moyens de traitement, est propre à mettre en oeuvre le procédé de contrôle selon l'une des revendications précédentes pour contrôler une recharge d'une batterie (BR) d'un véhicule (V) comprenant une première machine motrice (MM1) couplée à un embrayage (EM) également couplé à une seconde machine motrice (MM2), électrique et également couplée à ladite batterie (BR) et à un arbre primaire (AP) d'une boîte de vitesses (BV) couplée à un train.

9. Dispositif de contrôle (DC) pour un véhicule (V) comprenant une première machine motrice (MM1) couplée à un embrayage (EM) également couplé à une seconde machine motrice (MM2), électrique et également couplée à une batterie (BR) rechargeable et à un arbre primaire (AP) d'une boîte de vitesses (BV) couplée à un train, et comprenant au moins un processeur (PR) et au moins une mémoire (MD) agencés pour effectuer les opérations consistant, lorsque ladite boîte de vitesses (BV) est dans une position neutre et que ladite batterie (BR) est dans une phase de recharge, à contrôler un premier couple produit par ladite première machine motrice (MM1), **caractérisé en ce que** qu'il est en outre agencé pour effectuer les opérations consistant en outre à surveiller un écart entre des premier et second régimes respectivement desdites première (MM1) et seconde (MM2) machines motrices, et à contrôler ce premier couple produit par ladite première machine motrice (MM1) en fonction dudit écart.

10. Véhicule (V) comprenant une première machine motrice (MM1) couplée à un embrayage (EM) également couplé à une seconde machine motrice (MM2), électrique et également couplée à une batterie (BR) rechargeable et à un arbre primaire (AP) d'une boîte de vitesses (BV) couplée à un train, **caractérisé en ce qu'**il comprend en outre un dispositif de contrôle (DC) selon la revendication 9.

## Patentansprüche

1. Steuerverfahren für ein Fahrzeug (V), das eine erste Antriebsmaschine (MM1) umfasst, die mit einer Kupplung (EM) gekoppelt ist, die auch mit einer zweiten Antriebsmaschine (MM2) gekoppelt ist, elektrisch und auch mit einer wiederaufladbaren Batterie (BR) und einer primären Welle gekoppelt (AP) eines an einen Zug gekoppelten Getriebes (BV), wobei dieses Verfahren einen Schritt (10-40) umfasst, in dem, wenn sich das Getriebe (BV) in einer neutralen Position befindet und sich die Batterie (BR ) in einer Wiederaufladephase befindet, ein von der ersten Antriebsmaschine (MM1) erzeugtes erstes Drehmoment überwacht wird, **dadurch gekennzeichnet, dass** zusätzlich eine Differenz zwischen ersten bzw. zweiten Drehzahlen der ersten (MM1) und zweiten (MM2) Antriebsmaschine und dieses erste Drehmoment überwacht wird die von der ersten Antriebsmaschine (MM1) erzeugt wird, wird als Funktion dieser Differenz gesteuert.

2. Verfahren nach Anspruch 1, **dadurch gekennzeichnet, dass** in Schritt (10-40) das von der ersten Antriebsmaschine (MM1) erzeugte erste Drehmoment als Funktion der Differenz zwischen der ersten und der zweiten Geschwindigkeit reduziert wird.

3. Verfahren nach Anspruch 2, **dadurch gekennzeichnet, dass** in Schritt (10-40) ein erstes Grenzdrehmoment für die erste Antriebsmaschine (MM1) als eine Funktion gespeicherter Daten bestimmt wird, die eine Entsprechung zwischen Abweichungen zwischen der ersten und der zweiten Motordrehzahl herstellen die ersten limitierenden Paare.

4. Verfahren nach Anspruch 2, **dadurch gekennzeichnet, dass** in Schritt (10-40) die erste Antriebsmaschine (MM1) ein erstes gewähltes Grenzdrehmoment erzeugen muss, wenn die Differenz zwischen der ersten und der zweiten Geschwindigkeit größer als ein Schwellenwert wird.

5. Verfahren nach Anspruch 4, **dadurch gekennzeichnet, dass** das erste auferlegte Grenzdrehmoment vordefiniert ist.

6. Verfahren nach Anspruch 4, **dadurch gekennzeichnet, dass** das erste auferlegte Grenzdrehmoment in Abhängigkeit von der Abweichung gewählt wird.

7. Verfahren nach Anspruch 1, **dadurch gekennzeichnet, dass** in Schritt (10-40) die erste Geschwindigkeit der ersten Antriebsmaschine (MM1) als Funktion der Differenz zwischen der ersten und der zweiten Geschwindigkeit reduziert wird.

8. Computerprogrammprodukt, umfassend einen Satz von Anweisungen, die, wenn sie von Verarbeitungsmitteln ausgeführt werden, in der Lage sind, das Steuerverfahren nach einem der vorangehenden Ansprüche zum Steuern eines Wiederaufladens einer Batterie (BR) eines Fahrzeugs (V) zu implementieren, umfassend a erste Antriebsmaschine (MM1), die mit einer Kupplung (EM) gekoppelt ist, die auch mit einer zweiten Antriebsmaschine (MM2) gekoppelt ist, elektrisch und auch mit der Batterie (BR) und mit einer Primärwelle (AP) eines Getriebes (BV) gekoppelt ist ein Zug.

9. Steuervorrichtung (DC) für ein Fahrzeug (V), umfassend eine erste Antriebsmaschine (MM1), die mit einer Kupplung (EM) gekoppelt ist, die auch mit einer zweiten Antriebsmaschine (MM2) gekoppelt ist, elektrisch und auch gekoppelt mit einer wiederaufladbaren Batterie (BR) und an eine Primärwelle (AP) eines Getriebes (BV), das mit einem Zug gekoppelt ist und mindestens einen Prozessor (PR) und mindestens einen Speicher (MD) umfasst, die angeordnet sind, um die Operationen durchzuführen, die bestehen, wenn sich das Getriebe (BV) in a befindet Neutralstellung befindet und sich die Batterie (BR) in einer Wiederaufladephase befindet, um ein von der ersten Antriebsmaschine (MM1) erzeugtes erstes Drehmoment zu steuern, **dadurch gekennzeichnet, dass** sie ferner angeordnet ist, um die Operationen durchzuführen, die ferner darin bestehen, eine Differenz zwischen der ersten und der zweiten zu überwachen Drehzahlen der ersten (MM1) bzw. zweiten (MM2) Antriebsmaschine, und beim Steuern dieses ersten Drehmoments, das von der ersten Antriebsmaschine (MM1) erzeugt wird, als eine Funktion der Differenz.

10. Fahrzeug (V), umfassend eine erste Antriebsmaschine (MM1), die mit einer Kupplung (EM) gekoppelt ist, die auch mit einer zweiten Antriebsmaschine (MM2) gekoppelt ist, elektrisch und auch gekoppelt mit einer wiederaufladbaren Batterie (BR) und mit einer Primärwelle (AP) d 'ein an einen Zug gekoppeltes Schaltgetriebe (BV), **dadurch gekennzeichnet, dass** es ferner eine Steuervorrichtung (DC) nach Anspruch 9 umfasst.

## Claims

1. Control method for a vehicle (V) comprising a first driving machine (MM1) coupled to a clutch (EM) also coupled to a second driving machine (MM2), electric and also coupled to a rechargeable battery (BR) and to a shaft primary (AP) of a gearbox (BV) coupled to a train, this method comprising a step (10-40) in which, when said gearbox (BV) is in a neutral position and said battery (BR ) is in a recharging phase, a first torque produced by said first driving machine (MM1) is monitored, **characterized in that**, in addition, a difference is monitored between first and second speeds respectively of said first (MM1) and second ( MM2) driving machines, and this first torque produced by said first driving machine (MM1) is controlled as a function of said difference.

2. Method according to claim 1, **characterized in that** in said step (10-40) said first torque produced by said first prime mover (MM1) is reduced as a function of said difference between the first and second speeds.

3. Method according to claim 2, **characterized in that** in said step (10-40) a first limiting torque is determined for said first prime mover (MM1) as a function of stored data establishing a correspondence between deviations between said first and second engine speeds and the first limiting couples.

4. Method according to claim 2, **characterized in that** in said step (10-40) said first prime mover (MM1) is required to produce a first chosen limiting torque when said difference between said first and second speeds becomes greater than a threshold .

5. Method according to Claim 4, **characterized in that** the said first imposed limiting torque is predefined.

6. Method according to Claim 4, **characterized in that** the said first imposed limiting torque is chosen as a function of the said deviation.

7. Method according to claim 1, **characterized in that** in said step (10-40) said first speed of the first prime mover (MM1) is reduced as a function of said difference between the first and second speeds.

8. Computer program product comprising a set of instructions which, when it is executed by processing means, is capable of implementing the control method according to one of the preceding claims for controlling a recharging of a battery ( BR) of a vehicle (V) comprising a first driving machine (MM1) coupled to a clutch (EM) also coupled to a second driving machine (MM2), electric and also coupled to said battery (BR) and to a primary shaft (AP) of a gearbox (BV) coupled to a train.

9. Control device (DC) for a vehicle (V) comprising a first driving machine (MM1) coupled to a clutch (EM) also coupled to a second driving machine (MM2), electric and also coupled to a rechargeable battery (BR) and to a primary shaft (AP) of a gearbox (BV) coupled to a train, and comprising at least one processor (PR) and at least one memory (MD) arranged to perform the operations consisting, when said gearbox (BV) is in a neutral position and said battery (BR) is in a recharging phase, to control a first torque produced by said first drive machine (MM1), **characterized in that** it is further arranged to perform the operations further consisting in monitoring a difference between first and second speeds respectively of said first (MM1) and second (MM2) driving machines, and in controlling this first torque produced by said first driving machine (MM1) as a function of said difference.

10. Vehicle (V) comprising a first driving machine (MM1) coupled to a clutch (EM) also coupled to a second driving machine (MM2), electric and also coupled to a rechargeable battery (BR) and to a primary shaft (AP) d 'a gearbox (BV) coupled to a train, **characterized in that** it further comprises a control device (DC) according to claim 9.
